(19)

**Europäisches Patentamt**
**European Patent Office**
**Office européen des brevets**

(11)  **EP 4 215 259 B1**

(12)  # EUROPEAN PATENT SPECIFICATION

(45) Date of publication and mention
of the grant of the patent:
**06.11.2024 Bulletin 2024/45**

(21) Application number: **21869181.4**

(22) Date of filing: **02.09.2021**

(51) International Patent Classification (IPC):
**B01D 39/06** (2006.01)    **B23K 20/00** (2006.01)
**C23C 10/38** (2006.01)    **C22C 1/08** (2006.01)
**C22C 19/03** (2006.01)    **C22C 19/05** (2006.01)
**C23C 8/16** (2006.01)    **B01J 23/755** (2006.01)
**B22F 3/11** (2006.01)    **C23C 28/00** (2006.01)
**B01D 39/20** (2006.01)    **B22F 5/00** (2006.01)

(52) Cooperative Patent Classification (CPC):
(C-Sets available)
**C23C 28/321; B01D 39/2051; B22F 3/1115;**
**B22F 3/1143; B22F 3/1146; C22C 1/08;**
**C22C 19/05; C23C 8/16; C23C 10/38;**
**C23C 28/345;** B01D 2239/0478; B01D 2239/10;
B01D 2239/1208; B01D 2239/1216; B22F 5/006;

(Cont.)

(86) International application number:
**PCT/JP2021/032224**

(87) International publication number:
**WO 2022/059494 (24.03.2022 Gazette 2022/12)**

(54) **NICKEL-CHROMIUM POROUS BODY**

PORÖSER NICKEL-CHROM-KÖRPER

CORPS POREUX DE NICKEL-CHROME

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **17.09.2020   JP 2020156399**
**29.09.2020   JP 2020163246**
**07.10.2020   JP 2020169661**

(43) Date of publication of application:
**26.07.2023 Bulletin 2023/30**

(73) Proprietor: **Sumitomo Electric Toyama Co., Ltd.**
**Imizu-shi**
**Toyama 934-8522 (JP)**

(72) Inventors:
• **TSUCHIDA, Hitoshi**
**Imizu-shi, Toyama 934-8522 (JP)**
• **MABUCHI, Seiji**
**Imizu-shi, Toyama 934-8522 (JP)**

(74) Representative: **Boult Wade Tennant LLP**
**Salisbury Square House**
**8 Salisbury Square**
**London EC4Y 8AP (GB)**

(56) References cited:
**EP-A1- 3 653 741        WO-A1-2012/098941**
**WO-A1-2020/049815     WO-A1-2020/049851**
**JP-A- 2019 527 767      JP-A- S57 200 554**
**US-A1- 2020 280 073**

• **CHOE H ET AL: "Mechanical properties of**
**oxidation-resistant Ni-Cr foams", MATERIALS**
**SCIENCE, ELSEVIER, AMSTERDAM, NL, vol. 384,**
**no. 1-2, 25 October 2004 (2004-10-25), pages 184**
**- 193, XP004572777, ISSN: 0921-5093, DOI:**
**10.1016/J.MSEA.2004.06.045**

- **ANTON CHYRKIN ET AL: "Oxidation Limited Lifetime of Ni-Base Metal Foams in the Temperature Range 700-900 °C", ADVANCE ENGINEERING MATERIALS, WILEY VCH VERLAG, WEINHEIM, DE, vol. 12, no. 9, 10 September 2010 (2010-09-10), pages 873 - 883, XP072135468, ISSN: 1438-1656, DOI: 10.1002/ADEM.201000139**
- **PANG Q ET AL: "The influence of Ce content and preparation temperature on the microstructure and oxidation behavior of Ce-modified Cr coating on open-cell NiCrFe alloy foam", VACUUM, PERGAMON PRESS, GB, vol. 129, 19 April 2016 (2016-04-19), pages 86 - 98, XP029539710, ISSN: 0042-207X, DOI: 10.1016/J.VACUUM.2016.04.018**

(52) Cooperative Patent Classification (CPC): (Cont.)
B22F 2999/00

C-Sets
B22F 2999/00, B22F 3/1146, B22F 2003/248,
B22F 2003/242

**Description**

The present disclosure relates to a nickel-chromium porous body and a method of manufacturing a nickel-chromium porous body. This application claims priority based on Japanese Patent Applications No. 2020-156399 filed on September 17, 2020, No. 2020-163246 filed on September 29, 2020, and No. 2020-169661 filed on October 7, 2020.

Background Art

A sheet-shaped metal porous body having a skeleton with a three-dimensional mesh-like structure is used in various applications such as a filter, a catalyst support, a metal composite material, and an electrode plate for a battery. Celmet (manufactured by Sumitomo Electric Industries, Ltd., registered trade mark), which is a metal porous body made of nickel, is widely used in various industrial fields, for example, an electrode of an alkaline storage battery such as a nickel-hydrogen battery, a support of an industrial deodorizing catalyst.

The metal porous body may be required to have corrosion resistance depending on the application. As a metal porous body having high corrosion resistance, a nickel-chromium porous body in which a skeleton is formed of a nickel-chromium alloy is known. As a method of manufacturing a nickel-chromium porous body, methods disclosed in Japanese Unexamined Patent Application Publication No. 2012-149282 (PTL 1) and Japanese Unexamined Patent Application Publication No. H08-013129 (PTL 2) are known.

PTL 1 discloses a method of manufacturing a nickel-chromium porous body in which a chromium layer is formed on a surface of a skeleton of a nickel porous body whose skeleton is formed of nickel by plating, and then chromium is diffused by heat treatment. PTL 2 discloses a method of manufacturing a nickel-chromium porous body by a diffusion coating method in which a nickel porous body is embedded in a powder including Cr and $NH_4Cl$ and subjected to heat treatment in an Ar or $H_2$ gas atmosphere.

Japanese Unexamined Patent Application Publication No. 2017-054797 (PTL 3) discloses that forming an oxide film on the surface of the skeleton of a metal porous body enables the metal porous body to have further improved corrosion resistance. In addition, as a method of forming the oxide film on the surface of the skeleton of the metal porous body, it is disclosed that heat treatment is conducted in an oxidizing atmosphere or heat treatment is conducted after treatment with an acidic solution.

Citation List

Patent Literature

PTL 1: Japanese Unexamined Patent Application Publication No. 2012-149282
PTL 2: Japanese Unexamined Patent Application Publication No. H08-013129
PTL 3: Japanese Unexamined Patent Application Publication No. 2017-054797 CHOE H ET AL: "Mechanical properties of oxidation-resistant Ni-Cr foams",MATERIALS SCIENCE, ELSEVIER, AMSTERDAM, NL, vol. 384, no. 1-2, 25 October 2004 (2004-10-25), pages 184-193 discloses reticulated nickel foams alloyed with chromium by pack-chromizing, resulting in Ni-Cr foams with 9-32wt.% Cr and 2.6-3.5% relative density.

EP3653741 Al discloses a metal porous material in sheet form that includes a frame having a three-dimensional network configuration, wherein the frame includes an alloy including at least nickel and chromium, wherein the frame is a solid solution with iron and includes a chromium oxide (Cr2O3) layer as an outermost layer and includes a chromium carbide layer located under the chromium oxide layer

ANTON CHYRKIN ET AL: "Oxidation Limited Lifetime of Ni-Base Metal Foams in the Temperature Range 700-900 °C",ADVANCE ENGINEERING MATERIALS, WILEY VCH VERLAG, WEINHEIM, DE, vol. 12, no. 9, 10 September 2010 (2010-09-10), pages 873-883 discloses INCONEL 625 metal foams produced from alloy powder by the slip-reaction-foam-sinter-process and tested in respect to cyclic oxidation behaviour in air in the temperature range 700-900 °C. Summary of Invention

The present invention provides a nickel-chromium porous body according to claim 1.

A method of manufacturing a nickel-chromium porous body is also provided in the disclosure but does not form part of the invention. The method of manufacturing the nickel-chromium porous body includes preparing a nickel porous body having a skeleton with a three-dimensional mesh-like structure, obtaining a nickel-chromium porous body by subjecting the nickel porous body to chromizing treatment by a diffusion coating method, and forming a surface oxide layer on a surface of the skeleton by subjecting the nickel-chromium porous body after the chromizing treatment to heat treatment. The heat treatment is conducted in hydrogen gas containing at least water vapor.

Brief Description of Drawings

FIG. 1 is a schematic view of a nickel-chromium porous body according to an embodiment not forming part of the invention.

FIG. 2 is a photograph of a cross-section of a nickel-chromium porous body not forming part of the invention.

FIG. 3 is an enlarged schematic view of a partial cross-section of a nickel-chromium porous body not forming part of the invention.

FIG. 4 is a schematic view of a cross-section taken along line A-A of the skeleton of the nickel-chromium porous body shown in FIG. 3.

FIG. 5 is an enlarged view of the region enclosed by the dashed line in FIG. 4.

FIG. 6 is a schematic view of a processed nickel-chromium porous body according to the invention.

FIG. 7 is a schematic view of a processed nickel-chromium porous body according to the invention.

FIG. 8 is a photograph of a cross-section of a skeleton of a nickel-chromium porous body No. 1 produced in Example, not forming part of the invention, as observed with an electron microscope.

FIG. 9 is a photograph of a cross-section of a skeleton of a nickel-chromium porous body No. A produced in Comparative Example, as observed with an electron microscope.

Description of Embodiments

[Problems to be Solved by the Present Disclosure]

A metal porous body is often subjected to processings of rolling, cutting, grooving, bending, and so on, depending on the application. The present disclosers have studied in detail what kind of changes occurs in a skeleton when a metal porous body having an oxide film on the surface of the skeleton is subjected to the above-described processings (particularly, cutting in which a large force is applied). As a result, it has been confirmed that when a conventional metal porous body having an oxide film on the surface of the skeleton is cut, the oxide film is peeled off from the surface of the skeleton in the vicinity of the cut surface, or the oxide film cracks. The reason for this is considered to be that since the oxide film generally does not have high adhesion to a metal forming the skeleton, a gap is likely to be formed at the interface between the oxide film and the metal when a force applied, and in some cases, a gap may be already formed at the interface between the oxide film and the metal during formation of the oxide film.

Thus, it is an object of the present disclosure to provide a nickel-chromium porous body with less peeling of the oxide film on the surface of the skeleton even when processing such as cutting is performed.

[Advantageous Effects of Present Disclosure]

According to the present disclosure, it is possible to provide a nickel-chromium porous body with less peeling of the oxide film on the surface of the skeleton even when processing such as cutting is performed.

[Description of Embodiments of Present Disclosure]

A nickel-chromium porous body according to the invention is a nickel-chromium porous body that includes a skeleton having a three-dimensional mesh-like structure. The skeleton has a hollow inner portion and has a main metal layer and a surface oxide layer formed on each surface side of the main metal layer. The surface oxide layer has a thickness of 0.5 $\mu$m or more and contains chromium oxide as a main component. The main metal layer is formed of nickel-chromium having a chromium content of 10 mass% or more as a whole and has a chromium content of 20 mass% or more in a region extending at least 3 $\mu$m from an interface in contact with the surface oxide layer. The surface oxide layer and the main metal layer are in close contact with each other without a gap therebetween. With such a configuration, it is possible to provide a nickel-chromium porous body with less peeling of the oxide film on the surface of the skeleton even when processing such as cutting is performed.

When the nickel-chromium porous body is cut in a thickness direction, the surface oxide layer may be in close contact with the main metal layer in 80% or more of the skeleton in a fracture cross-section of the nickel-chromium porous body. With such a configuration, for example, it is possible to provide a nickel-chromium porous body in which the surface oxide layer is hardly peeled off from the surface of the skeleton even when the nickel-chromium porous body is cut.

The nickel-chromium porous body may have a thickness of 0.5 mm to 5.0 mm. With such a configuration, it is possible to provide a nickel-chromium porous body which is lightweight and has high strength.

The nickel-chromium porous body may have a porosity of 60% to 98%. With such a configuration, it is possible to provide a nickel-chromium porous body having a high porosity.

According to a first aspect of the invention, the nickel-chromium porous body has a bottom surface having a polygonal shape and have a curved shape from the bottom surface toward an apex. The bottom surface has a side having a length of 2 mm to 10 mm, and a height from the bottom surface to the apex is 0.5 mm to 5.0 mm. With such a configuration, it is possible to provide a nickel porous body having a shape suitable for a filter application or a catalyst support application.

According to a second aspect of the invention, the nickel-chromium porous body has a bottom surface having a circular shape and have a hemispherical shape from the bottom surface toward an apex. The bottom surface has a diameter of 2 mm to 10 mm, and a height from the bottom surface to the apex is 0.5 mm to 5 mm. With such a configuration, it is possible to provide a nickel porous body having a shape suitable for a filter application or a catalyst support application.

According to an aspect of the disclosure, not forming part of the invention, a method of manufacturing a nickel-chromium porous body includes preparing a nickel porous body having a skeleton with a three-dimensional mesh-like structure, obtaining a nickel-chromium porous body by subjecting the nickel porous body to chromizing treatment by a diffusion coating method, and forming a surface oxide layer on a surface of the skeleton by subjecting the nickel-chromium porous body after the chromizing treatment to heat treatment. The heat treatment is conducted in hydrogen gas containing at least water vapor. With such a configuration, it is possible to provide a method of manufacturing a nickel-chromium porous body with less peeling of the oxide film on the surface of the skeleton even when processing such as cutting is performed.

In the method of manufacturing a nickel-chromium porous body, heat treatment may be conducted at a temperature of 900°C to 1200°C forming a surface oxide layer on a surface of the skeleton by subjecting the nickel-chromium porous body after the chromizing treatment to heat treatment. With such a configuration, it is possible to provide a method of manufacturing a nickel-chromium porous body with less peeling of the oxide film on the surface of the skeleton even when processing such as cutting is performed.

[Details of examples of the Present Disclosure]

Examples of a nickel-chromium porous body and a method of manufacturing a nickel-chromium porous body will be described in more detail.

<Nickel-Chromium Porous Body>

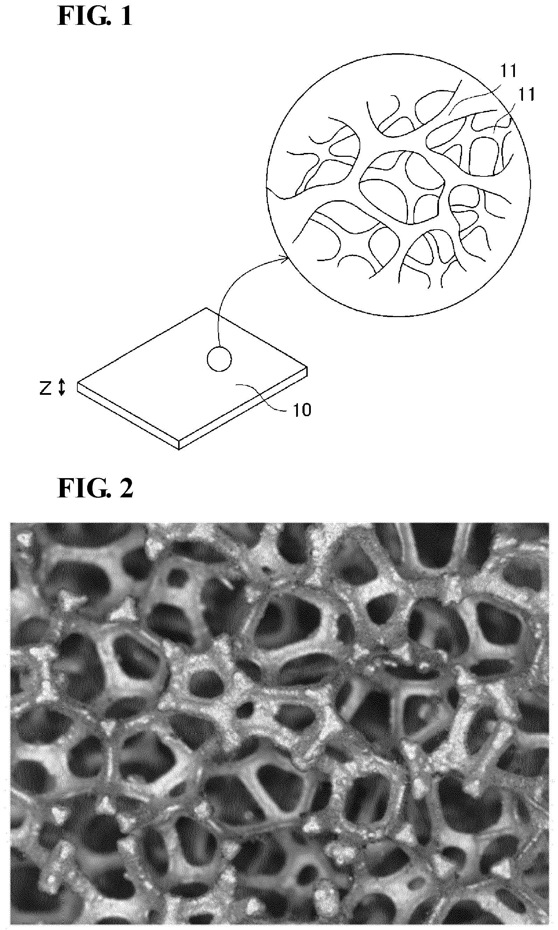

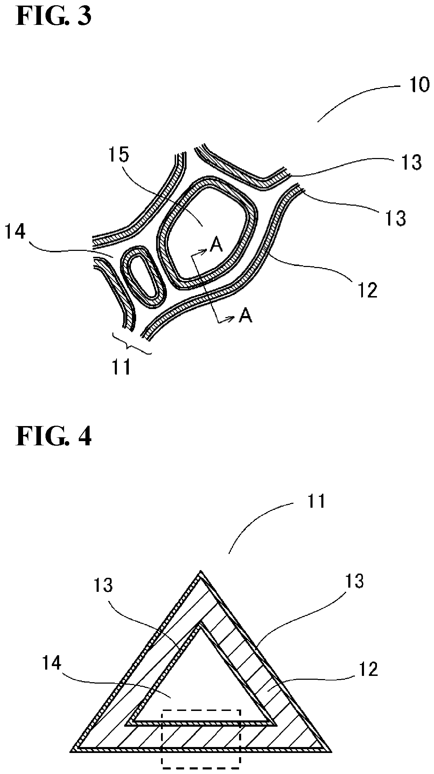

FIG. 1 is a schematic view of an example of a nickel-chromium porous body 10 not forming part of the invention. FIG. 2 is an enlarged photograph of a skeleton 11 of a three-dimensional mesh-like structure of nickel-chromium porous body 10 shown in FIG. 1. FIG. 3 is an enlarged schematic view of a cross-section of nickel-chromium porous body 10 shown in FIG. 2.

As shown in FIG. 1, nickel-chromium porous body 10 has skeleton 11 with a three-dimensional mesh-like structure, and in many cases, has a flat plate-like appearance as a whole.

As shown in FIG. 3, skeleton 11 of nickel-chromium porous body 10 is formed of a main metal layer 12 and a surface oxide layer 13. An inner portion 14 of skeleton is hollow. Further, a pore portion 15 formed by skeleton 11 is an interconnected pore that cells, which may be modeled as a regular dodecahedron, are connected to each other from the surface to the interior of nickel-chromium porous body 10 to form. FIG. 4 is a schematic view of a cross-section taken along line A-A of skeleton 11. The cross-sectional shape of skeleton 11 can be modeled as a triangular shape whose central portion (an inner portion 14 of the skeleton) is hollow. Skeleton 11 has main metal layer 12 and surface oxide layers 13 formed on each surface side of main metal layer 12. Surface oxide layer 13 on one surface side faces inner portion 14 of the skeleton, and surface oxide layer 13 on the other surface side faces pore portion 15 of nickel-chromium porous body 10.

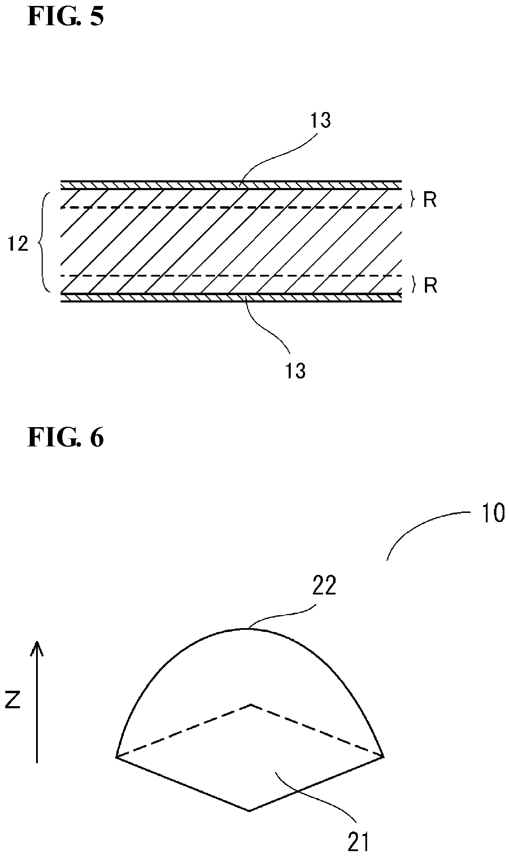

FIG. 5 is an enlarged view of skeleton 11 in a region enclosed by the dashed line in FIG. 4. Surface oxide layer 13 formed on each surface side of main metal layer 12 has a thickness of 0.5 $\mu$m or more and contains chromium oxide as a main component. Note that the main component refers to the most abundant component contained in surface oxide layer 13. Surface oxide layer 13 may contain nickel, nickel oxide, Fe, or the like in addition to chromium oxide.

The upper limit of the thickness of surface oxide layer 13 is not particularly limited, but may be about 1.0 $\mu$m or less in consideration of the cost required for forming surface oxide layer 13. When the thickness of surface oxide layer 13 is too large, surface oxide layer 13 is easily peeled off from the surface of main metal layer 12. In addition, since surface oxide layer 13 increases a surface resistance of nickel-chromium porous body 10, the thickness of surface oxide layer 13 may be thin when nickel-chromium porous body 10 is used for an application requiring conductivity. From these viewpoints, the upper limit of the thickness of surface oxide layer 13 may be 2.0 $\mu$m or less, or 1.0 $\mu$m or less.

Main metal layer 12 is formed of nickel-chromium having a chromium content of 10 mass% or more as a whole.

As the content of chromium increases, main metal layer 12 has excellent corrosion resistance. Thus, the upper limit of the chromium content of main metal layer 12 is not particularly limited, but may be about 50 mass% or less in consideration of the cost required for alloying. From these viewpoints, the content of chromium in main metal layer 12 may be 15 mass% to 50 mass%, or may be 20 mass% to 40 mass% as a whole. Note that main metal layer 12 may intentionally or inevitably contain other components such as nickel and chromium oxide in addition to nickel-chromium.

Main metal layer 12 has a chromium content of 10 mass% or more as a whole, but has a chromium concentration of 20 mass% or more in a region R extending at least 3 μm from an interface in contact with surface oxide layer 13. As will be described later, in the process of manufacturing nickel-chromium porous body 10 according to an embodiment of the present disclosure, by having the chromium content in region R extending at least 3 μm from an interface in contact with surface oxide layer 13 of 20 mass% or more, nickel-chromium porous body 10 in which main metal layer 12 and surface oxide layer 13 are in close contact with each other without a gap therebetween can be obtained. The chromium content in region R may be 30 mass% to 80 mass%, or may be 40 mass% to 60 mass%.

In skeleton 11 forming nickel-chromium porous body 10 according to an embodiment of the present disclosure, main metal layer 12 and surface oxide layer 13 are firmly in close contact with each other without a gap therebetween. Hence, in nickel-chromium porous body 10, even when a strong force is applied to skeleton 11 due to bending or cutting, surface oxide layer 13 is hardly peeled off, and high corrosion resistance can be maintained.

For example, when nickel-chromium porous body 10 is cut in a thickness direction Z, surface oxide layer 13 may be in close contact with main metal layer 12 in 80% or more of skeleton 11 in a fracture cross-section of nickel-chromium porous body 10. In the fracture cross-section of nickel-chromium porous body 10, the proportion of a portion where surface oxide layer 13 is in close contact with main metal layer 12 is determined as follows. First, nickel-chromium porous body 10 is embedded in a resin and cut in a thickness direction to observe a fracture cross-section thereof with an electron microscope. At this time, an area of "entire region in the thickness direction × 20 mm in a widthwise direction" in the fracture cross-section is observed, and for all skeletons observed in the area of the fracture cross-section, the length of a portion where surface oxide layer 13 is in close contact with main metal layer 12 is measured. When it can be found at a glance that a portion where surface oxide layer 13 is peeled off from main metal layer 12 is the lesser in the electron micrograph of the fracture cross-section, the length of the portion where surface oxide layer 13 is peeled off may be measured and the length of the portion where surface oxide layer 13 is in close contact with main metal layer 12 may be calculated as "(total peripheral length of skeleton × 2) - (length of peeled portion)". In this case, the reason for doubling the total peripheral length of the skeleton will be described later. Then, the proportion of the portion where surface oxide layer 13 is in close contact with main metal layer 12 in the skeleton of the fracture cross-section is calculated by the following Formula (A).

Proportion (%) of close contact portion = (length of close contact portion)/(total peripheral length of skeleton × 2) × 100          [Formula A]

Since surface oxide layer 13 is also formed on inner portion 14 side of the skeleton, the "length of close contact portion" in the above Formula (A) refers to a length of a portion where surface oxide layer 13 is in close contact with each surface on pore portion 15 side and inner portion 14 side of main metal layer 12 forming skeleton 11. Similarly, the "length of peeled portion" refers to a length of a portion where surface oxide layer 13 is peeled from each surface on pore portion 15 side and inner portion 14 side of main metal layer 12 forming skeleton 11. In order to determine the "length of close contact portion" as described above, in the above Formula (A) for calculating the "proportion of close contact portion" in the skeleton of the fracture cross-section, the "length of the close contact portion" is divided by a value obtained by doubling the "total peripheral length of skeleton". Similarly, also when the "length of close contact portion" is calculated from the "length of peeled portion", it is necessary to subtract the length of the peeled portion from a value obtained by doubling the total peripheral length of the skeleton. In addition, since the cross-section of skeleton 11 can be modeled as a substantially triangular shape as described above, the "total peripheral length of skeleton" in the above Formula (A) can be calculated by the following Formula (B).

Total peripheral length of skeleton = (the number of skeletons × total length of three sides)          [Formula B]

In Formula (B), "the number of skeletons" means the number of skeletons present in the observed fracture cross-section, and "total length of three sides" means the sum of the lengths of three sides of skeleton 11 modeled as a substantially triangular shape.

In nickel-chromium porous body 10, the proportion (%) of the close contact portion calculated by the above Formula (A) may be 80% or more. In nickel-chromium porous body 10 according to an embodiment of the present disclosure, since surface oxide layer 13 is firmly in close contact with main metal layer 12 without a gap therebetween, surface oxide layer 13 is hardly peeled off from the surface of skeleton 11 in the vicinity of the fracture cross-section even when processing such as cutting is performed, and high corrosion resistance can be maintained.

The thickness of nickel-chromium porous body 10 may be appropriately selected depending on the application of the nickel-chromium porous body. For example, having a thickness of 0.5 mm to 5.0 mm allows nickel-chromium porous body 10 to be lightweight and to have high strength. Nickel-chromium porous body 10 may have a thickness of 0.5 mm to 2.5 mm. For example, nickel-chromium porous body 10 having a relatively large thickness is prepared and compressed in a thickness direction Z to adjust the thickness. Nickel-chromium porous body 10 can be manufactured by using a nickel porous body as a starting material. At this time, for example, Celmet (registered trade mark) manufactured by Sumitomo Electric Industries, Ltd. is used as a nickel porous body to prepare a nickel porous body having a thickness of 5.0 mm or more, and nickel-chromium porous body 10 having a thickness of 5.0 mm or more can be manufactured using the nickel porous body. Even when a nickel porous body having a thickness of less than 5.0 mm is used, nickel-chromium porous body 10 having a thickness of 5.0 mm or more can be manufactured. For example, in the step of subjecting a nickel porous body to chromizing treatment in the method of manufacturing a nickel-chromium porous body, two or more nickel porous bodies may be laminated in a thickness direction and subjected to the chromizing treatment with skeletons of the nickel porous bodies in contact with each other. This allows the two or more nickel porous bodies to be alloyed and integrated with the skeletons of the nickel porous bodies in contact with each other, and nickel-chromium porous body 10 having a thickness of 5.0 mm or more per sheet is obtained. The portion where the skeletons of the two or more nickel porous bodies are in contact with each other is firmly bonded by welding. The thickness of nickel-chromium porous body 10 can be measured with, for example, a digital thickness gauge.

The porosity of nickel-chromium porous body 10 may be appropriately selected depending on the application of the nickel-chromium porous body. For example, when nickel-chromium porous body 10 is used as a filter, it is desirable that nickel-chromium porous body 10 has an excellent ability to collect an object to be collected and a small pressure loss. Nickel-chromium porous body 10 may have a porosity of 60% to 98%, 70% to 98%, or 90% to 98%, for example. In many cases, nickel-chromium porous body 10 has a porosity of about 98% immediately after manufacturing, but compression processing in thickness direction Z allows the porosity to be reduced.

The porosity of nickel-chromium porous body 10 is defined by the following Formula (1).
[Formula 1]

$$\text{Porosity } (\%) = [1 - \{Mp/(Vp \times dp)\}] \times 100 \qquad (1)$$

where Mp is a mass [g] of a nickel-chromium porous body,
Vp is a volume ($cm^3$) of an appearance shape of the nickel-chromium porous body, and
dp is a density [$g/cm^3$] of a metal forming the nickel-chromium porous body.

The average pore size of nickel-chromium porous body 10 may be appropriately selected depending on the application of nickel-chromium porous body 10. As an example, nickel-chromium porous body 10 may have an average pore size of 50 $\mu$m to 5000 $\mu$m, 100 $\mu$m to 1000 $\mu$m, or 200 $\mu$m to 900 $\mu$m.

The average pore size of nickel-chromium porous body 10 is calculated by the following Formula (2) using an average number (nc) of pore portions 15 per inch (25.4 mm = 25400 $\mu$m) which a main surface of nickel-chromium porous body 10 is observed in at least 10 fields of view with a microscope or the like to obtain.
[Formula 2]

$$\text{Average pore size} = 25400 \text{ }\mu\text{m/nc} \qquad (2)$$

The measurement of the number of pore portions 15 is performed in accordance with the determination of the number of pores (number of cells) for flexible cellular polymeric materials according to JIS K6400-1:2004 Annex 1 (reference).

In nickel-chromium porous body 10 according to an embodiment of the present disclosure, surface oxide layer 13 is hardly peeled off from the surface of skeleton 11 even when nickel-chromium porous body 10 is cut. Therefore, for example, high corrosion resistance can be maintained even when nickel-chromium porous body 10 is finely processed. Processed nickel-chromium porous body 10 can be used, for example, as a filter or a catalyst support which requires corrosion resistance.

FIG. 6 is a schematic view of an example of processed nickel-chromium porous body 10 according to the invention. Nickel-chromium porous body 10 has a bottom surface 21 having a polygonal shape and has a curved shape from bottom surface 21 toward an apex 22. Bottom surface 21 has a side having a length of 2 mm to 10 mm and either a square shape or a rectangular shape. A height from bottom surface 21 to apex 22 is 0.5 mm to 5.0 mm. Note that the height is defined as a length of a perpendicular line from apex 22 to bottom surface 21. Examples of the polygonal shape include, for example, a quadrangular shape, a pentagonal shape, a hexagonal shape, and the like.

A main surface of a flat plate-like nickel-chromium porous body having a thickness of, for example, 0.5 mm to 5.0 mm is cut so as to form a quadrangular shape with a side having a length of 2 mm to 10 mm to manufacture nickel-chromium porous body 10. Since the nickel-chromium porous body in which inner portion 14 of skeleton 11 is hollow is easily deformed when a pressure is applied, cutting the nickel-chromium porous body so as to form a quadrangular shape with a side having a length of 2 mm to 10 mm causes the cut portion to be crushed and reduced in thickness. As a result, the center portion of the quadrangular shape becomes apex 22, and slopes are formed from apex 22 toward the four sides to form a curved shape.

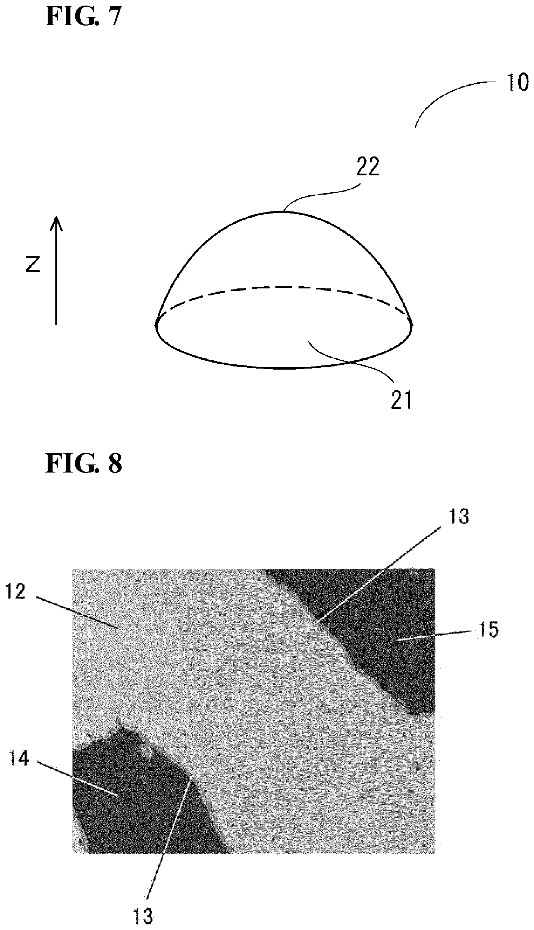

FIG. 7 is a schematic view of another example of processed nickel-chromium porous body 10 according to the invention. Nickel-chromium porous body 10 has a bottom surface 21 having a circular shape and has a hemispherical shape from bottom surface 21 toward apex 22. Bottom surface 21 has a diameter of 2 mm to 10 mm. A height from bottom surface 21 to apex 22 is 0.5 mm to 5.0 mm. A nickel-chromium porous body with bottom surface 21 having a circular shape has a higher filling rate into a given volume than a nickel-chromium porous body with bottom surface 21 having a quadrangular shape. As in the nickel-chromium porous body shown in FIG. 6, a main surface of a flat plate-like nickel-chromium porous body having a thickness of 0.5 mm to 5.0 mm is cut so as to form a circular shape having a diameter of 2 mm to 10 mm to manufacture nickel-chromium porous body 10. The circular shape of the bottom surface may be a perfect circle or an ellipse. In the case of an ellipse, an average diameter of the major axis and the minor axis is treated as the diameter. Further, the height is defined as a length of a perpendicular line from apex 22 to bottom surface 21. The hemispherical shape may be a hemisphere or a semi-ellipsoid.

Cutting a plurality of flat plate-like nickel-chromium porous bodies laminated in the thickness direction also enables processed nickel-chromium porous body 10 shown in FIG. 6 or FIG. 7 to be manufactured. Cutting the flat plate-like nickel-chromium porous bodies in the laminated state causes, for example, the skeleton of a portion to which a blade is applied to be crushed and entangled with each other, thereby bonding the laminated nickel-chromium porous bodies to each other. In the processed nickel-chromium porous body, since the size of bottom surface 21 is smaller relative to the height from bottom surface 21 to apex 22, the adhesive force due to the entanglement of the skeleton in a peripheral portion is sufficient, so that the laminated nickel-chromium porous bodies can be used in an integrated state without being separated from each other.

<Method of Manufacturing Nickel-Chromium Porous Body>

An aspect of the disclosure, not forming part of the invention, relates to a method of manufacturing a nickel-chromium porous body. The method includes preparing a nickel porous body having a skeleton with a three-dimensional mesh-like structure, obtaining a nickel-chromium porous body by subjecting the nickel porous body to chromizing treatment by a diffusion coating method, forming a surface oxide layer on a surface of the skeleton by subjecting the nickel-chromium porous body after the chromizing treatment to heat treatment. Furthermore, in the method of manufacturing the nickel-chromium porous body, heat treatment may be conducted at a temperature of 900°C to 1200°C in the step of obtaining the nickel-chromium porous body by the chromizing treatment. With such a configuration, it is possible to provide a method of manufacturing a nickel-chromium porous body with lesser peeling of the oxide film on the surface of the skeleton even when processing such as cutting is performed.

(Step of Preparing Nickel Porous Body)

This step is a step of preparing a nickel porous body having a skeleton with a three-dimensional mesh-like structure in which the skeleton contains nickel as a main component. Handling of the nickel porous body is easier when it has a sheet-like shape as a whole. Nickel forming the skeleton of the nickel porous body is alloyed with chromium to obtain the nickel-chromium porous body according to an embodiment of the present disclosure. Therefore, the structure (porosity, average pore size, etc.) of the nickel porous body may be the same as the structure required for nickel-chromium porous body 10. As in nickel-chromium porous body 10, the nickel porous body may be prepared in which the inner portion of skeleton is hollow and the skeleton forms the pore portion. The porosity and average pore size of the nickel porous body are defined in the same manner as the porosity and average pore size of nickel-chromium porous body 10 described above. Containing nickel as a main component in the skeleton of the nickel porous body means that nickel is the most abundant component contained in the skeleton of the nickel porous body.

(Step of Subjecting Nickel Porous Body to Chromizing Treatment)

In this step, diffusion coating of chromium is applied to nickel forming the skeleton of the nickel porous body prepared in the above step to alloy nickel and chromium with each other, thereby obtaining a nickel-chromium porous body. As a method of diffusion coating of chromium, a known method can be employed. For example, it is possible to adopt a method in which a nickel porous body is embedded in a powder containing at least chromium (Cr), aluminum oxide ($Al_2O_3$), and ammonium chloride ($NH_4Cl$) and heated to about 950°C to 1200°C in an inert gas atmosphere such as Ar gas. For example, when the heating temperature is 1000°C, the heating time may be about 10 hours. The heating time and temperature may be appropriately adjusted so that a chromium concentration in the skeleton is 10 mass% or more as a whole.

(Step of Forming Surface Oxide Layer)

In this step, the nickel-chromium porous body obtained in the above step is subjected to heat treatment to form an oxide layer on the surface of the skeleton (each surface side of the inner portion side and the pore portion side of the skeleton). Through this step, nickel-chromium porous body 10 having skeleton 11 in which the surface oxide layer is formed on each surface side of main metal layer 12 is obtained. The heat treatment is conducted in hydrogen gas containing at least water vapor. The hydrogen gas may contain at least water vapor, and may further contain nitrogen gas or the like as in ammonia cracked gas, for example. This allows the chromium content of the surface (each surface side of the inner portion side and the pore portion side of the skeleton) of the skeleton (main metal layer 12) formed of nickel-chromium having a chromium content of 10 mass% or more to be increased, thereby forming a dense film containing chromium oxide (surface oxide layer 13). At this time, surface oxide layer 13 is formed in close contact with the surface of main metal layer 12 without a gap therebetween. In addition, surface oxide layer 13 formed in this manner is extremely unlikely to crack or peel off from main metal layer 12 even when the nickel-chromium porous body is bent or cut. The temperature at which the heat treatment is conducted may be, for example, about 900°C to 1200°C, and may be about 950°C to 1100°C. The atmosphere in which the heat treatment is conducted may be, for example, an atmosphere in which a volumetric ratio ($H_2/H_2O$) of hydrogen gas to water vapor is in a range of 0.01 to 1000, may be in a range of 1 to 100, or may be in a range of 10 to 50.

Before the heat treatment in hydrogen gas containing at least water vapor, heat treatment may be conducted in an oxidizing atmosphere such as an air atmosphere. A surface oxide layer can be relatively rapidly formed on the surface of the skeleton of the nickel porous body by the heat treatment in an oxidizing atmosphere. However, since the surface oxide layer is easily peeled off from the main metal layer of the skeleton when heat treatment is conducted only in the oxidizing atmosphere, heat treatment in hydrogen gas containing at least water vapor needs to follow the heat treatment in the oxidizing atmosphere.

EXAMPLES NOT FORMING PART OF THE INVENTION

Hereinafter, the present disclosure will be described in more detail based on examples, but these examples are merely illustrative, and the nickel-chromium porous body and the like of the present disclosure are not limited thereto.

[Example 1]

(Step of Preparing Nickel Porous Body)

As a nickel porous body having a skeleton with a three-dimensional mesh-like structure, a nickel porous body (Celmet #4, Sumitomo Electric Industries, Ltd.) having a thickness of 2.0 mm, a porosity of 98%, and an average pore size of 850 $\mu$m was prepared.

(Step of Chromizing Treatment)

In a stainless steel furnace, a mixed powder was prepared in which 1 mass% of an aluminum powder, 50 mass% of a chromium powder, 0.5 mass% of an ammonium chloride powder, and an aluminum oxide powder as a balance were blended. The nickel porous body prepared in the above-mentioned step was embedded in the mixed powder. Subsequently, heat treatment was conducted at 1000°C for 10 hours to alloy nickel forming the skeleton of the nickel porous body with chromium.

(Step of Forming Surface Oxide Layer)

The nickel-chromium porous body obtained in the above step was subjected to heat treatment in an atmosphere in which the volumetric ratio ($H_2/H_2O$) of hydrogen gas to water vapor was 32. Heat treatment was conducted at a temperature of 1000°C for 20 minutes. As a result, a nickel-chromium porous body No. 1 was obtained.

[Example 2]

A nickel-chromium porous body No. 2 was obtained in the same manner as in Example 1 except that an ammonia cracked gas mixture ($H_2$ + $N_2$) containing water vapor was used instead of hydrogen gas containing water vapor in the step of forming a surface oxide layer in the manufacturing method described in Example 1. The volumetric ratio ($H_2/H_2O$) of hydrogen gas to water vapor was 25.

[Comparative Example 1]

A nickel-chromium porous body No. A was manufactured in the same manner as in Example 1 except that the step of forming the surface oxide layer was performed as follows in the manufacturing method described in Example 1. In the step of forming a surface oxide layer, the nickel-chromium porous body obtained in the above step was subjected to heat treatment in a nitrogen ($N_2$) gas atmosphere. Heat treatment was conducted at a temperature of 1000°C for 20 minutes.

[Comparative Example 2]

A nickel-chromium porous body No. B was manufactured in the same manner as in Example 1 except that the step of forming a surface oxide layer was performed as follows in the manufacturing method described in Example 1. In the step of forming a surface oxide layer, the nickel-chromium porous body obtained in the above step was subjected to heat treatment in a hydrogen ($H_2$) gas atmosphere. Heat treatment was conducted at a temperature of 1000°C for 20 minutes.

[Comparative Example 3]

A nickel-chromium porous body No. C was manufactured in the same manner as in Example 1 except that the heat treatment in the step of the chromizing treatment was conducted at 800°C for 2 hours in the manufacturing method described in Example 1.

[Comparative Example 4]

A nickel-chromium porous body No. D was manufactured in the same manner as in Example 1 except that the step of forming a surface oxide layer was not performed in the manufacturing method described in Example 1.

[Evaluation]

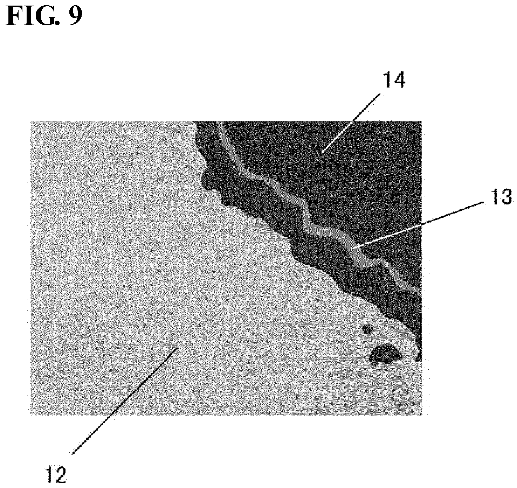

Nickel-chromium porous bodies No. 1 and No. 2 and nickel-chromium porous bodies No. A to No. D were press-cut in thickness direction Z, and the skeleton of each fracture cross-section was observed with an electron microscope. FIG. 8 shows the result of nickel-chromium porous body No. 1, and FIG. 9 shows the result of nickel-chromium porous body No. A. In the fracture cross-section of the nickel-chromium porous body No. 1, main metal layer 12 and surface oxide layer 13 were firmly in close contact with each other without a gap therebetween, and surface oxide layer 13 was hardly peeled off. That is, it was confirmed that surface oxide layer 13 was in close contact with main metal layer 12 in 80% or more of skeleton 11 of the fracture cross-section. The same result was also confirmed for nickel-chromium porous body No. 2. Surface oxide layer 13 had a thickness of 0.5 $\mu$m in nickel-chromium porous body No. 1 and a thickness of 1.0 $\mu$m in nickel-chromium porous body No. 2.
On the other hand, as shown in FIG. 9, it was confirmed that in nickel-chromium porous body No. A in which the surface oxide layer was formed in a nitrogen gas atmosphere, although nickel-chromium porous body No. A had a thick surface oxide layer 13, a gap was formed at the interface between surface oxide layer 13 and main metal layer 12 and that most of surface oxide layer 13 was peeled off. In nickel-chromium porous body No. B in which the surface oxide layer was formed in a hydrogen gas atmosphere containing no water vapor, and nickel-chromium porous body No. C in which the chromizing treatment was performed under a condition in which the chromium content of main metal layer 12 was less than 10 mass%, it was confirmed that a gap was formed at the interface between surface oxide layer 13 and main metal layer 12 in the skeleton of the fracture cross-section and that surface oxide layer 13 was peeled off, as in nickel-chromium porous body No. A. In addition, in nickel-chromium porous body No. D which was manufactured without forming a surface oxide layer, surface oxide layer 13 was hardly formed on the surface of the skeleton, and surface oxide layer 13 had a thickness of less than 0.1 $\mu$m.
The skeletons of nickel-chromium porous bodies No. 1 and No. 2 and the nickel-chromium porous bodies No. A to No. D were analyzed by EDX and XRD to examine the compositions and alloy components of the respective skeletons. The results are shown in Table 1 below. In nickel-chromium porous body No. 1, main metal layer 12 had a chromium content of 25 mass% as a whole. In addition, main metal layer 12 had a chromium content of 23.9 mass% in a region extending at least 3 $\mu$m from the interface in contact with surface oxide layer 13. In nickel-chromium porous body No. 2, main metal layer 12 had a chromium content of was 28 mass% as a whole. In addition, main metal layer 12 had a chromium content of 29.7 mass% in a region extending at least 3 $\mu$m from the interface in contact with surface oxide layer 13. In nickel-chromium porous body No. A, main metal layer 12 had a chromium content of 23 mass% as a whole. In addition, main metal layer 12 had a chromium content of 41.7 mass% in a region extending at least 3 $\mu$m from the interface in contact with surface oxide layer 13. In nickel-chromium porous body No. B, main metal layer 12 had a chromium content of 24 mass% as a whole. In addition, main metal layer 12 had a chromium content of 46.3 mass% in a region extending at least 3 $\mu$m from the interface in contact with surface oxide layer 13. In nickel-chromium porous body No. C, main metal layer 12 had a chromium content of 7 mass% as a whole. In addition, main metal layer 12 had a chromium content of 12 mass% in a region extending at least 3 $\mu$m from the interface in contact with surface oxide layer 13.

[Table 1]

| Nickel-chromium porous body No. | Chromizing Treatment | | Oxidizing conditions | | | | $H_2/H_2O$ Hydrogen/ Water vapor | Cr content | | Close ontact port ion (%) | Conductivity | Oxide film ($\mu$m) | Corrosion resistance 0.8V vs. Ag/AgCl |
|---|---|---|---|---|---|---|---|---|---|---|---|---|---|
| | | | | | | | | Evaluation results | | | | | |
| | Temperature (°C) | Time (H) | Temperature (°C) | Time (min) | Gas | H2O | | Region extending 3$\mu$m (mass%) | Entire region (mass%) | | | | |
| 1 | 1,000 | 10 | 1,000 | 20 | $H_2$ | Present | 32 | 23.9 | 25 | 83 | 2Ω | 0.5 | 6 |
| 2 | 1,000 | 10 | 1,000 | 20 | $H_2 + N_2$ | Present | 25 | 29.7 | 28 | 96 | 3Ω | 1.0 | 3 |
| A | 1,000 | 10 | 1,000 | 20 | $N_2$ | Absent | 0 | 41.7 | 23 | 20 | 10Ω | 1.0 | 13 |
| B | 1,000 | 10 | 1,000 | 20 | $H_2$ | Absent | 0 | 46.3 | 24 | 15 | 10Ω | 1.0 | 15 |
| C | 800 | 2 | 1,000 | 20 | $H_2$ | Present | 32 | 12 | 7 | 18 | 10Ω | 0.5 | 14 |
| D | 1,000 | 10 | - | - | - | - | - | 40 | 28 | 0 | 2mΩ | <0.1 | 12 to 14 |

Electrical resistances of nickel-chromium porous bodies No. 1 and No. 2 and nickel-chromium porous bodies No. A to No. D were measured to evaluate conductivities. The electrical resistance of each nickel-chromium porous body was measured in a thickness direction using a test piece having a size of 3 cm × 3 cm with electrodes holding the top and bottom of the test piece to sandwich the test piece and a load of 0.12 MPa applied to the entire test piece. The results are shown in Table 1. It was confirmed that nickel-chromium porous bodies No. 1 and No. 2 had lower electrical resistances than nickel-chromium porous bodies No. A to No. C.

Corrosion resistances of nickel-chromium porous bodies No. 1 and No. 2 and nickel-chromium porous bodies No. A to No. D were measured according to the ASTM standard (ASTM-G5-94). Specifically, linear sweep voltammetry (LSV) measurement (Scan Rate: 5 mV/sec) was repeatedly performed using aqueous sodium sulfate (pH3) at 60°C, and a current value (mA) at 0.8 V vs. Ag/AgCl in the fifth measurement was measured. The potential sweep range was from 0.1 V to 1.0 V vs. SHE. Each nickel-chromium porous body was cut into a size of 20 mm × 20 mm and then welded to a Pt wire. A Pt mesh was used as a counter electrode. A distance between electrodes was adjusted to 20 mm. A silver/silver chloride electrode was used as a reference electrode. The results are shown in Table 1. It was confirmed that nickel-chromium porous bodies No. 1 and No. 2 had superior corrosion resistance than nickel-chromium porous bodies No. A to No. D.

Reference Signs List

10    nickel-chromium porous body

11    skeleton

12    main metal layer

13    surface oxide layer

14    inner portion of skeleton

15    pore portion

21    bottom surface

22    apex

R    region having high chromium content

Z    thickness direction

**Claims**

1. A nickel-chromium porous body comprising a skeleton having a three-dimensional mesh-like structure,

wherein the skeleton has a hollow inner portion and has a main metal layer and a surface oxide layer formed on each surface side of the main metal layer,
the surface oxide layer has a thickness of 0.5 $\mu$m or more and contains chromium oxide as a main component,
the main metal layer is formed of nickel-chromium having a chromium content of 10 mass% or more as a whole and has a chromium content of 20 mass% or more in a region extending at least 3 $\mu$m from an interface in contact with the surface oxide layer, and
the surface oxide layer and the main metal layer are in close contact with each other without a gap therebetween, **characterised in that**:

the nickel-chromium porous body has a bottom surface having a polygonal shape and has a curved shape from the bottom surface toward an apex, the bottom surface has a side having a length of 2 mm to 10 mm, and a height from the bottom surface to the apex is 0.5 mm to 5.0 mm, or
the nickel-chromium porous body has a bottom surface having a circular shape and has a hemispherical shape from the bottom surface toward an apex, the bottom surface has a diameter of 2 mm to 10 mm, and a height from the bottom surface to the apex is 0.5 mm to 5.0 mm.

**2.** The nickel-chromium porous body according to claim 1,
wherein when the nickel-chromium porous body is cut in a thickness direction, the surface oxide layer is in close contact with the main metal layer in 80% or more of the skeleton in a fracture cross-section of the nickel-chromium porous body.

**3.** The nickel-chromium porous body according to claim 1 or 2, having a thickness of 0.5 mm to 5.0 mm.

**4.** The nickel-chromium porous body according to any one of claims 1 to 3, having a porosity of 60% to 98%.

**Patentansprüche**

**1.** Poröser Nickel-Chrom-Körper, der ein Skelett mit einer dreidimensionalen maschenartigen Struktur umfasst,

wobei das Skelett einen hohlen inneren Abschnitt hat und eine Hauptmetallschicht und eine Oberflächenoxidschicht aufweist, die auf jeder Oberflächenseite der Hauptmetallschicht ausgebildet ist,
wobei die Oberflächenoxidschicht eine Dicke von 0,5 $\mu$m oder mehr hat und Chromoxid als Hauptbestandteil enthält,
die Hauptmetallschicht aus Nickel-Chrom mit einem Chromgehalt von 10 Ma% oder mehr als Ganzes gebildet ist und einen Chromgehalt von 20 Ma% oder mehr in einem Bereich aufweist, der sich mindestens 3 $\mu$m von einer Grenzfläche in Kontakt mit der Oberflächenoxidschicht erstreckt, und
die Oberflächenoxidschicht und die Hauptmetallschicht in engem Kontakt zueinander stehen, ohne dass ein Spalt dazwischen liegt,
**dadurch gekennzeichnet, dass**:

der poröse Nickel-Chrom-Körper eine Bodenfläche mit einer polygonalen Form hat und eine gekrümmte Form von der Bodenfläche zu einem Scheitelpunkt hat, die Bodenfläche eine Seite mit einer Länge von 2 mm bis 10 mm hat und eine Höhe von der Bodenfläche zum Scheitelpunkt 0,5 mm bis 5,0 mm beträgt, oder der poröse Nickel-Chrom-Körper eine Bodenfläche mit einer kreisförmigen Form hat und von der Bodenfläche zu einem Scheitelpunkt hin eine halbkugelförmige Form hat, die Bodenfläche einen Durchmesser von 2 mm bis 10 mm hat und eine Höhe von der Bodenfläche zum Scheitelpunkt 0,5 mm bis 5,0 mm beträgt.

**2.** Poröser Nickel-Chrom-Körper nach Anspruch 1,
wobei, wenn der poröse Nickel-Chrom-Körper in einer Dickenrichtung geschnitten wird, die Oberflächenoxidschicht in 80 % oder mehr des Skeletts in einem Bruchquerschnitt des porösen Nickel-Chrom-Körpers in engem Kontakt mit der Hauptmetallschicht steht.

**3.** Poröser Nickel-Chrom-Körper nach Anspruch 1 oder 2, mit einer Dicke von 0,5 mm bis 5,0 mm.

**4.** Poröser Nickel-Chrom-Körper nach einem der Ansprüche 1 bis 3 mit einer Porosität von 60 % bis 98 %.

**Revendications**

**1.** Corps poreux en nickel-chrome comprenant un squelette ayant une structure tridimensionnelle en forme de maille,

dans lequel le squelette a une partie intérieure creuse et a une couche métallique principale et une couche d'oxyde de surface formée sur chaque côté de surface de la couche métallique principale,
la couche d'oxyde de surface a une épaisseur de 0,5 $\mu$m ou plus et contient de l'oxyde de chrome comme composant principal,
la couche métallique principale est formée de nickel-chrome ayant une teneur en chrome de 10 % en masse ou plus dans son ensemble et a une teneur en chrome de 20 % en masse ou plus dans une région s'étendant sur au moins 3 $\mu$m à partir d'une interface en contact avec la couche d'oxyde de surface, et
la couche d'oxyde de surface et la couche métallique principale sont en contact étroit l'une avec l'autre sans espace entre elles,

**caractérisé en ce que**:

le corps poreux en nickel-chrome a une surface inférieure ayant une forme polygonale et a une forme incurvée de la surface inférieure vers un sommet, la surface inférieure a un côté ayant une longueur de 2 mm à 10 mm, et une hauteur de la surface inférieure au sommet est de 0,5 mm à 5,0 mm, ou

le corps poreux en nickel-chrome a une surface inférieure ayant une forme circulaire et a une forme hémisphérique de la surface inférieure vers un sommet, la surface inférieure a un diamètre de 2 mm à 10 mm, et une hauteur de la surface inférieure au sommet est de 0,5 mm à 5,0 mm.

2. Corps poreux en nickel-chrome selon la revendication 1,
dans lequel lorsque le corps poreux en nickel-chrome est coupé dans une direction de l'épaisseur, la couche d'oxyde de surface est en contact étroit avec la couche métallique principale dans 80 % ou plus du squelette dans une section transversale de fracture du corps poreux en nickel-chrome.

3. Corps poreux en nickel-chrome selon la revendication 1 ou 2, ayant une épaisseur de 0,5 mm à 5,0 mm.

4. Corps poreux en nickel-chrome selon l'une quelconque des revendications 1 à 3, ayant une porosité de 60 % à 98 %.

**FIG. 1**

**FIG. 2**

**FIG. 3**

**FIG. 4**

## FIG. 5

## FIG. 6

**FIG. 7**

**FIG. 8**

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020156399 A
- JP 2020163246 A
- JP 2020169661 A
- JP 2012149282 A
- JP H08013129 A
- JP 2017054797 A
- EP 3653741 A

**Non-patent literature cited in the description**

- Mechanical properties of oxidation-resistant Ni-Cr foams. **CHOE H et al.** MATERIALS SCIENCE. ELSEVIER, 25 October 2004, vol. 384, 184-193
- Oxidation Limited Lifetime of Ni-Base Metal Foams in the Temperature Range 700-900 °C. **ANTON CHYRKIN et al.** ADVANCE ENGINEERING MATERIALS. WILEY VCH VERLAG, 10 September 2010, vol. 12, 873-883